# EUROPEAN PATENT APPLICATION

(11) **EP 1 701 402 A1**
(43) Date of publication of application: **13.09.2006**
(21) Application number: 06251224.9
(22) Date of filing: 08.03.2006
(51) Int. Cl.: H01M 8/04, H01M 8/24

(54) **Systems and methods for minimizing temperature differences and gradients in solid oxide fuel cells**

(30) Priority: 08.03.2005 US 906818
(71) Applicant: GENERAL ELECTRIC COMPANY, Schenectady, NY 12345 (US)
(72) Inventor: Potnis, Shailesh Vjay, Neenah WI 54956 (US)
(74) Representative: Pedder, James Cuthbert

(57) **Abstract**

Temperature differences and temperature gradients across Solid Oxide Fuel Cells (SOFCs) are minimized through the used of a manifold heat exchanger, which reduces thermal stress and increase cell life. Air passes from a periphery of a cell toward the cell center, where it absorbs cell heat. The air then proceeds to the manifold heat exchanger located adjacent the cell, where the air indirectly absorbs further heat. Additionally, fuel is directed countercurrent to air, which keeps hot spots away from cell stack seals and directs hot air toward intense reforming areas on the cell to mitigate quenching effects of internal reforming.

## Description

The present invention relates to Solid Oxide Fuel Cells (SOFCs), and more specifically, to systems and methods for maximizing the life of SOFCs by minimizing the temperature differences and gradients across a SOFC cell through the use of a manifold heat exchanger.

SOFCs are energy conversion systems that convert chemical to electrical energy directly. SOFCs are able to provide a continuous supply of electric power if replenished with fuel. They provide the clean conversion of chemical energy to electricity, low levels of noise pollution, the ability to cope with different fuels, and high efficiency due to high operating temperatures, which may exceed 1000°C.

Because they operate at high temperatures SOFCs utilize ceramics in their construction. More specifically, ceramics are used as functional elements of a SOFC cell. As is known in the art, each SOFC cell is composed of an anode and a cathode separated by an impermeable electrolyte, which conducts oxygen ions from the cathode to the anode where they react chemically with fuel. The electric charge induced by the passage of the ions is collected and conducted away from the cell. Although each cell generates a limited voltage, the use of a series of connected stacks is used to increase the voltage and the useful power. To create a connected stack of cells, interconnects are used, which may also be used to isolate the fuel and air supplies for each cell.

It will be appreciated that within the SOFC it is imperative that the fuel and air streams are kept separate, and that a thermal balance should be maintained to ensure that the temperature of operation remains within an acceptable range. Waste heat generated due the electrochemical reaction in a cell increases the temperature of the reactants as well as the stack components. The severity of this temperature increase on stack components and the resultant temperature gradients depend on the SOFC's component design, material properties, reactant flow rates, and flow configuration. A high temperature difference across a cell leads to high thermal gradients and thermal stress, which may lead to cell cracking and reduced cell life.

SOFC operation using internal reforming, as is well known in the art, is an endothermic reaction and can lead to substantial local cooling (also referred to as quenching). This may result in very high local temperature gradients, which can lead to high stress, cell cracking, and carbon deposition. In particular, the failure of SOFC cell seals due to cracking resulting from thermal stresses can result in fuel leakage, anode oxidation, and performance degradation of an SOFC. Although the effect of temperature or temperature gradients on seals is not thoroughly understood, tests have shown that the seal strength reduces significantly at relatively high temperatures. Therefore, what is needed is a way to minimize thermal gradients in an SOFC cell and to isolate the seals from hot spots on the cell.

In the present invention, incoming air is first directed over the cell to absorb heat directly from the cell. Air then proceeds to a manifold plate where it receives second part of heat indirectly through the manifold plate. This arrangement reduces the temperature difference and temperature gradient across an SOFC cell in order to reduce thermal stresses and increase SOFC cell life. According to another embodiment of the present invention, the fuel may be directed countercurrent to air, which serves to keep hot spots away from the seal and direct hot air towards intense internal reforming area on the cell to mitigate quenching effects of internal reforming.

According to one embodiment of the invention, there is disclosed a method for minimizing cell temperature differences in a fuel cell. The method includes the steps of passing air over a first surface of a cell to absorb heat directly from the cell, where the air originates from a periphery of the cell, receiving the air at a manifold heat exchanger adjacent the cell, where the air absorbs heat from the manifold heat exchanger that the manifold heat exchanger absorbs from the cell, and exhausting the air from a periphery of the manifold heat exchanger via at least one exhaust outlet of the manifold heat exchanger.

According to one aspect of the invention, the step of receiving the air at a manifold plate adjacent the cell includes the step of receiving the air at the center of the manifold heat exchanger. According to another aspect of the invention, the manifold heat exchanger includes a manifold plate. According to yet another aspect of the invention, the step of passing air over a first surface of the cell to absorb heat directly from the cell comprises passing air over a first surface of the cell from a periphery of the cell to a center portion of the cell.

The method may further include the steps of providing a fuel passage in the manifold heat exchanger, and passing fuel, via the fuel passage, to a second surface of the cell. According to another aspect of the invention, the step of passing fuel includes the step of passing fuel to a second surface of the cell via a fuel passage that passes the fuel to the second surface at a center portion of the cell. Furthermore, the method may further include step of exhausting the fuel from a periphery of the cell.

According to another embodiment of the invention, there is disclosed a system for minimizing cell temperature differences in a fuel cell. The system includes an air flow field adjacent a cell, where the air flow field is operable to carry air over a first surface of the cell from a periphery of the cell to a center of the cell. The system also includes a manifold heat exchanger adjacent the air flow field, where the manifold heat exchanger is operable to receive the air from the air flow field, and where the manifold heat exchanger is further operable to exhaust the air from at least one exhaust outlet in a periphery of the manifold heat exchanger.

According to one aspect of the invention, the air flow field includes at least one central opening through which the air may pass from the air flow field to the manifold heat exchanger. According to another aspect of the invention, the manifold heat exchanger may be a manifold plate. According to yet another aspect of the invention, the system may include a fuel flow field operable to carry fuel over a second surface of the cell from a center of the cell to a periphery of the cell. Furthermore, the manifold heat exchanger may be operable to supply the fuel flow field with fuel, and may include a fuel passage located substantially in the center of the manifold heat exchanger. According to another aspect of the invention, the cell may be a cell within a solid oxide fuel cell, and the manifold heat exchanger and the cell comprise a single cell stack within a solid oxide fuel cell having multiple cell stacks.

The invention will now be described in greater detail, by way of example, with reference to the drawings, in which:-
FIG. 1 shows an external view of a SOFC assembly, according to one embodiment of the present invention.
FIG. 2 shows a component view of the SOFC assembly of FIG. 1, according to one embodiment of the present invention.
FIG. 3a shows a single cell stack schematic used within the SOFC assembly of FIG. 1, according to one embodiment of the present invention.
FIG. 3b shows a single cell stack schematic, according to one embodiment of the present invention.
FIG. 4a shows an illustrative cell temperature contour when using the heat exchanger manifold described in detail with respect to FIG. 3a.
FIG. 4b shows an illustrative cell temperature contour of a cell that does not include a heat exchanger manifold like that described with respect to FIG. 3a.

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

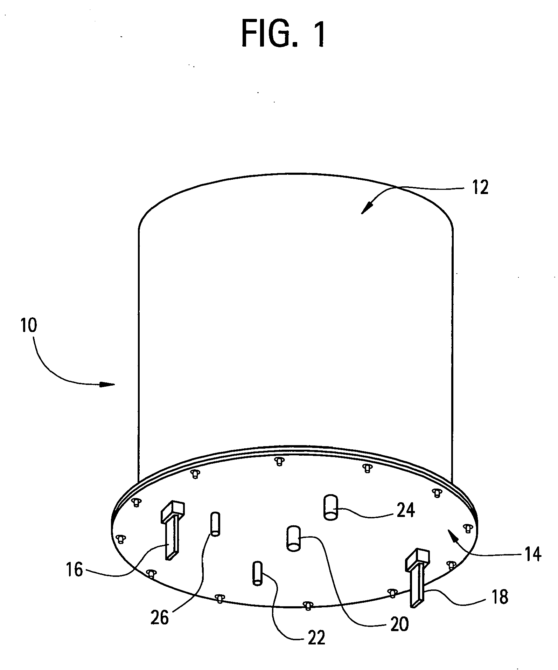

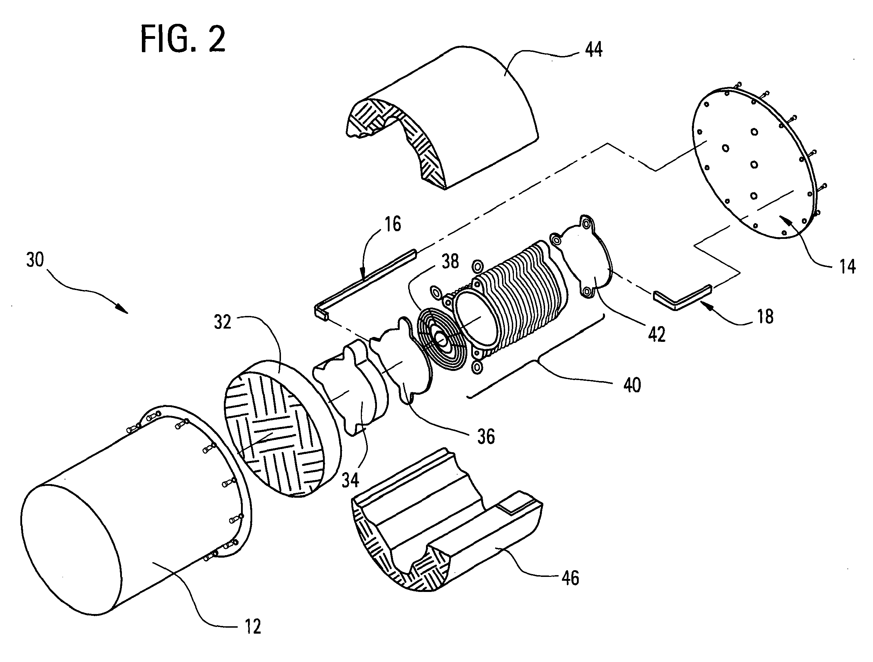

FIG. 1 shows an SOFC assembly 10 according to one embodiment of the present invention. The assembly 10 includes a large housing 12 that has plate 14 which is removably affixed to the underside of the housing 12 to seal the assembly 10. A positive power terminal 16, negative power terminal 18, fuel inlet 28, a spent fuel outlet 22, air inlet 24, and air outlet 20 project through the plate 14. The fuel and air inlets 28, 24 provide the air and fuel that are distributed to the anode and cathode, respectively, by interconnects within the SOFC, as is known to those of ordinary skill in the art. Likewise, the spent fuel outlet 22 and air outlet 20 permit the exhaust of the depleted fuel and air subsequent to their passage through a cell stack within the assembly 10. The fuel and air inlets 28, 24 and fuel and air outlets 22, 20 are connected to a manifold assembly (not illustrated) within the SOFC assembly 10, through which the fresh and spent air and fuel passes. The internal components of the stack assembly 10 are described in greater detail in FIG. 2

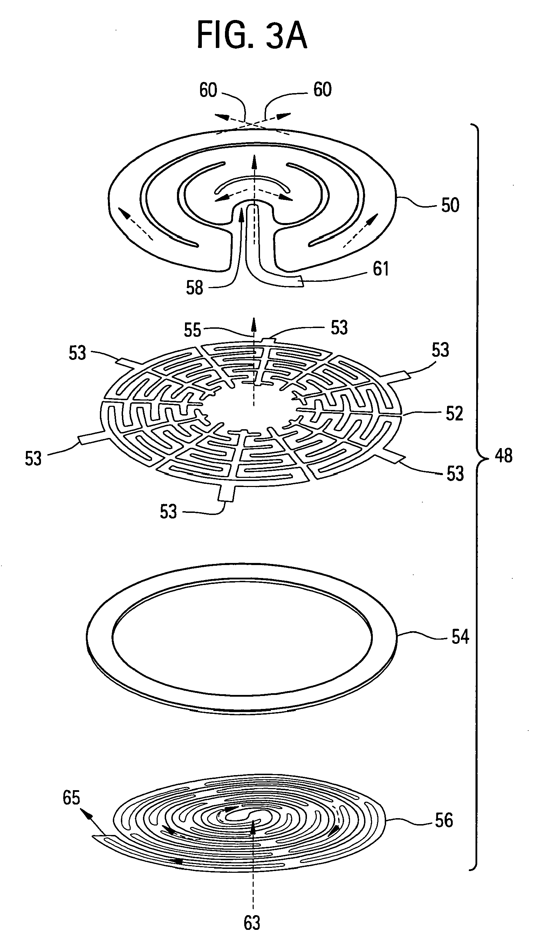

FIG. 2 shows an exploded view of the SOFC assembly 10 of FIG. 1, where the exploded view shows the internal components of the assembly 10, according to one embodiment of the present invention. As shown in FIG. 2, the internal components of the assembly 10 are contained within the housing 12. Located at the top of the interior of the housing is a layer of insulation 32, which is located directly above and adjacent to a dead weight 34. As known in the art, the dead weight 34 is used to facilitate good electrical contact between elements of the stack module 40, as described below. Directly beneath the dead weight 34 is the uppermost element of the stack module 40, the top current collector plate 36, which is connected to the positive power terminal 16. A bottom current collector plate 42, which is the bottommost element of the stack module 40, is located at the opposite end of the stack module 40 and is connected to the negative power terminal 18. Although only a top current collector plate 36 and bottom current collector plate 42 are illustrated in FIG. 2, it will be appreciated that the stack module 40 may include a plurality of collector plates for collecting electrical current generated by cells within the stack module 40. Therefore, it should be appreciated that the exploded view of FIG. 2 is intended as an overview of the components of the SOFC assembly 10 and thus does not include each and every the component of the stack module, or each cell within the stack module 40. A schematic of a single cell within the stack module 40 is described in detail with respect to FIG. 3a, below.

Referring again to FIG. 2, the assembly 10 shown in FIG. 2 also includes an interconnect 38 located between the top current collector plate 36 and the cathode of the top cell within the stack module 40. As are known in the art, the stack module 40 may include multiple interconnects that serve to connect the multiple cells within the stack module 40 together, and function as the electrical contacts to cathodes and anodes while protecting the cathodes from the reducing atmosphere of the anode. The stack module 40 is encased within insulating members 44, 46, and the assembly 10 is sealed within the large housing 12 by the plate 14 removably affixed to the underside of the housing 12. Although not illustrated in FIG. 2, it will be appreciated that the SOFC assembly 10 may include additional components, such as a manifold assembly, air and fuel pipes and bellows, insulation, power strips, gaskets, and the like, as are known to those of ordinary skill in the art.

FIG. 3a shows a cell stack 48 schematic, according to one embodiment of the present invention. The cell stack 48 represents only a single cell stack, or sub stack, within the stack module 40 of FIG. 2. Therefore, it will be appreciated that a plurality of cell stacks 48 that are be stacked together to form the stack module 40. As shown in FIG. 3a, the cell stack 48 generally includes a cell 54. The cell 54, as is known in the art, has three components, including a cathode, electrolyte, and anode (not illustrated), with the electrolyte sandwiched between the cathode and anode. One of the most common materials for the electrolyte is cubic zirconia stabilized with yttria (Y₂O₃), or YSZ, although scandium-doped zirconia and gadolinium-doped ceria may also be employed. Among other concerns known to those of ordinary skill in the art, the Coefficient of Thermal Expansion (CTE) of the anode, electrolyte, and cathode should be matched. During operation of the SOFC, air passes by the cathode and fuel passes by the anode, and the electrolyte conducts oxygen ions from the cathode to the anode where they react chemically with the fuel. The electric charge induced by the passage of the ions may then by collected and conducted away from the cell, as is known in the art.

The cell stack 48 also includes a cathode (or air) flow field 52 that is directly adjacent the cell's 54 cathode, and an anode (or fuel) flow field 56 that is directly adjacent the cell's anode. The respective air flow field 52 and fuel flow field 56 are created by the interconnects located, respectfully, adjacent the cathode and anode of the cell 54. The interconnects serve to distribute fuel and air to the anode and cathode, respectively. The interconnects also provide a barrier between the anode and the cathode of adjacent cell stacks, and may also serve as current collectors. Interconnects are typically ceramic or ferritic stainless steels that have exceptional conductivity, oxidation-reduction resistance, matching coefficients of thermal expansion (CTE) to the contacting layers, and are impermeable. The cell stack 48 further includes a seal that separates the fuel and air (i.e., oxidant gas) flows. Because the entire cell stack 48 is exposed to very high temperatures, thermal expansion is a critical concern for the proper function of the SOFC.

As shown in FIG. 3a, air enters cathode flow field 52 directly adjacent one or more air inlets 53 at the periphery of the cell 54 to absorb heat directly from the cell 54. The air temperature increases as it proceeds towards the center of the cell 54. The cathode flow field 52 includes a central opening through which the air may pass, proceeding away 55 from the cell 54. The air then enters a manifold heat exchanger 50 through an opening 58 on the underside of the manifold heat exchanger 50 near the center of the manifold heat exchanger 50. The manifold heat exchanger 50 is included within the cell stack 48, such that each cell stack within the stack module 40 may include a respective manifold for receiving air that passes over a respective cell. The manifold heat exchanger 50 is generally planar, and may be constructed of platinum, stainless steel, stainless steel 446, Ebrite, or an alloy similar to stainless steel. Further, according to an alternative embodiment of the invention, there may be less than one manifold heat exchanger 50 for each cell stack, such that the air passing over more than one cathode may enter a single manifold heat exchanger.

The air entering the manifold heat exchanger 50 absorbs additional heat indirectly through the manifold plate as it flows towards one or more exhaust outlets 60. As shown in FIG. 3a, because the air enters the manifold heat exchanger 50 from the center of the manifold heat exchanger 50, the air flows toward the periphery of the manifold heat exchanger 50 through one or more channels within the exchanger 50. Air then flows out of the heat exchanger via the one or more air exhaust outlets 60 on the outside of the manifold heat exchanger 50. Subsequently, the air exhaust is expelled from the SOFC via pipes connecting air exhaust (not illustrated), as is known to those of ordinary skill in the art. As is also illustrated in FIG. 3a, the manifold heat exchanger 50 includes a fuel inlet 61, which is a narrow passage though which fuel flows. Upon passing through the fuel inlet, the fuel enters 63 the anode flow field 56 through a channel located directly adjacent the center of the cell 54 on the anode side. In a flow that is counter or opposite the air flow on the cathode side, the fuel travels from directly adjacent the center of the cell 54 towards the periphery of the cell 54, where the spent fuel 65 is exhausted. Similar to the spent air, the fuel exhaust may be expelled from the SOFC via fuel exhaust bellows (not illustrated), as is known to those of ordinary skill in the art.

The cell stack 48 shown in FIG. 3a results in global countercurrent arrangement for air and fuel flow. Thus, the air flows over the cathode from the outside of the cell cathode toward the inside of the cell cathode, while the fuel flows from an inside of the cell anode toward the outside of the cell anode. This reduces the temperature differences and temperature gradient across the cell 54, thereby reducing thermal stress and increasing cell life. This arrangement also effectively isolates hot spots from cell stack seals to increase their robustness and longevity. As a result, cell stack 48 performance is stable, and the likelihood of leakage and anode oxidation is significantly reduced. It will be appreciated that although the cathode flow field 52 shown in FIG. 3a illustrates the air as proceeding from an exterior of the cell toward its center in a winding fashion, almost any arrangement may be used, so long as the air enters from a periphery of the cathode flow field 52 and travels toward the center of the cell 54. Likewise, though the anode flow field 56 shows the fuel passing through the anode flow field 56 in a spiraling, clockwise fashion, the anode flow field 56 may also be constructed in alternative arrangements that allow the fuel to flow from a position adjacent the center of the cell 54 to the periphery of the cell 54.

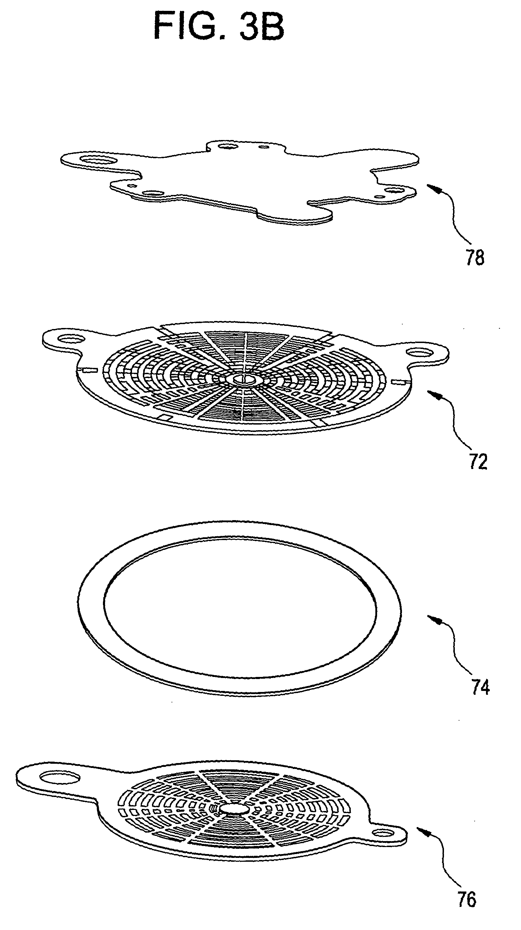

FIG. 3b shows another illustration of a single cell stack schematic, according to one embodiment of the present invention. Like the schematic illustrated in FIG. 3a, the single cell stack includes an air flow field 72 and fuel flow field 76 directly adjacent the cathode and anode of the cell 74. FIG. 3b also shows a manifold heat exchanger 70. As with the embodiment discussed with respect to FIG. 3a, the design results in global countercurrent arrangement for air and fuel flow, where air flows over the cathode from the outside of the cell cathode toward the inside of the cell cathode, and fuel flows from an inside of the cell anode toward the outside of the cell anode. This reduces the temperature differences and temperature gradient across the cell 74, thereby reducing thermal stress and increasing cell life.

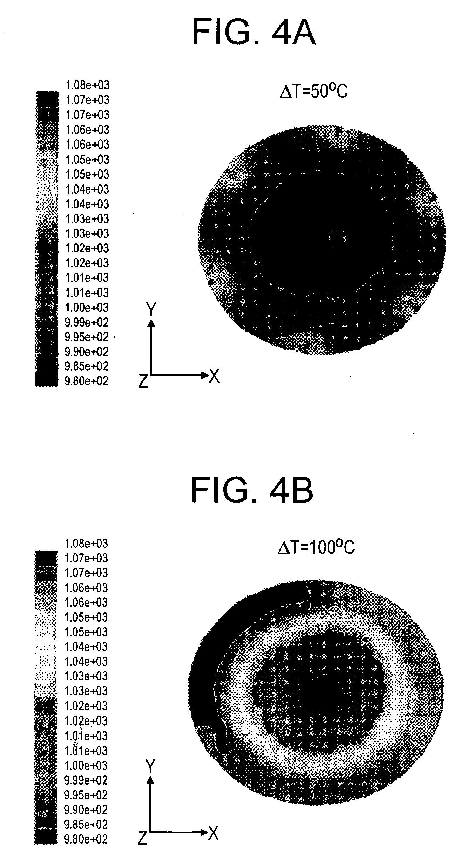

FIGS. 4a and 4b show an illustrative cell temperature contour with and without the use, respectively, of a heat exchanger manifold like that described in detail with respect to FIG. 3a. As illustrated in FIG. 4a, the total temperature difference across all portions of a cell is approximately 50°C when the heat exchange manifold is used. That is distinguishable from the cell temperature difference when the manifold heat exchanger was not used, which is approximately 100°C, as shown in FIG. 4b. Because the cell temperature difference is reduced, the use of a heat exchanger manifold according to the present invention leads to reduction in temperature gradients and thermal stress, which reduces cell cracking and increases cell life. This also increases the seal life and strength, which prevents leakage and anode oxidation. This further reduces heat loss and increases system efficiency.

For the sake of good order, various aspects of the invention are set out in the following clauses:
1. A method for minimizing cell temperature differences in a fuel cell, comprising:
   passing air over a first surface of a cell (54, 74) to absorb heat directly from the cell (54, 74), where the air originates from a periphery of the cell (54, 74);
   receiving the air at a manifold heat exchanger (50, 70) adjacent the cell (54, 74), wherein the air absorbs heat from the manifold heat exchanger (50, 70) that the manifold heat (50, 70) exchanger absorbs from the cell (54, 74); and
   exhausting the air from a periphery of the manifold heat exchanger (50, 70) via at least one exhaust outlet (60) of the manifold heat exchanger (50, 70).
2. The method of clause 1, wherein the step of receiving the air at a manifold plate (14) adjacent the cell (54, 74) comprises the step of receiving the air at the center of the manifold heat exchanger (50, 70).
3. The method of clause 1, wherein the manifold heat exchanger (50, 70) comprises a manifold plate (14).
4. The method of clause 1, wherein the step of passing air over a first surface of the cell (54, 74) to absorb heat directly from the cell (54, 74) comprises passing air over a first surface of the cell (54, 74) from a periphery of the cell (54, 74) to a center portion of the cell (54, 74).
5. The method of clause 1, further comprising the steps of:
   providing a fuel passage in the manifold heat exchanger (50, 70); and
   passing fuel, via the fuel passage, to a second surface of the cell (54, 74).
6. The method of clause 5, wherein the step of passing fuel comprises the step of passing fuel to a second surface of the cell (54, 74) via a fuel passage that passes the fuel to the second surface at a center portion of the cell (54, 74).
7. The method of clause 6, further comprising the step of exhausting the fuel from a periphery of the cell (54, 74).
8. A system for minimizing cell temperature differences in a fuel cell, comprising:
   an air flow field (52, 72) adjacent a cell (54, 74), wherein the air flow field (52, 72) is operable to carry air over a first surface of the cell (54, 74) from a periphery of the cell (54, 74) to a center of the cell (54, 74);
   a manifold heat exchanger (50, 70) adjacent the air flow field (52, 72), wherein the manifold heat exchanger (50, 70) is operable to receive the air from the air flow field (52, 72), and wherein the manifold heat exchanger (50, 70) is further operable to exhaust the air from at least one exhaust outlet (60) in a periphery of the manifold heat exchanger (50, 70).
9. The system of clause 8, wherein the air flow field (52, 72) includes at least one central opening (58) through which the air may pass from the air flow field (52, 72) to the manifold heat exchanger (50, 70).
10. The system of clause 8, wherein the manifold heat exchanger (50, 70) comprises a manifold plate (14).
11. The system of clause 8, further comprising a fuel flow field (56, 76) operable to carry fuel over a second surface of the cell (54, 74) from a center of the cell (54, 74) to a periphery of the cell (54, 74).
12. The system of clause 11, wherein the manifold heat exchanger (50, 70) is operable to supply the fuel flow field (56, 76) with fuel.
13. The system of clause 12, wherein the manifold heat exchanger (50, 70) further comprises a fuel passage located substantially in the center of the manifold heat exchanger (50, 70).
14. The system of clause 8, wherein the cell (54, 74) is a cell (54, 74) within a solid oxide fuel cell stack.
15. The system of clause 14, wherein the manifold heat exchanger (50, 70) and the cell (54, 74) comprise a single cell stack (48) within a solid oxide fuel cell having multiple cell stacks (48).

## Claims

1. A method for minimizing cell temperature differences in a fuel cell, comprising:
passing air over a first surface of a cell (54, 74) to absorb heat directly from the cell (54, 74), where the air originates from a periphery of the cell (54, 74);
receiving the air at a manifold heat exchanger (50, 70) adjacent the cell (54, 74), wherein the air absorbs heat from the manifold heat exchanger (50, 70) that the manifold heat (50, 70) exchanger absorbs from the cell (54, 74); and
exhausting the air from a periphery of the manifold heat exchanger (50, 70) via at least one exhaust outlet (60) of the manifold heat exchanger (50, 70).

2. The method of claim 1, wherein the step of receiving the air at a manifold plate (14) adjacent the cell (54, 74) comprises the step of receiving the air at the center of the manifold heat exchanger (50, 70).

3. The method of claim 1, wherein the manifold heat exchanger (50, 70) comprises a manifold plate (14).

4. The method of claim 1, wherein the step of passing air over a first surface of the cell (54, 74) to absorb heat directly from the cell (54, 74) comprises passing air over a first surface of the cell (54, 74) from a periphery of the cell (54, 74) to a center portion of the cell (54, 74).

5. The method of claim 1, further comprising the steps of:
providing a fuel passage in the manifold heat exchanger (50, 70); and
passing fuel, via the fuel passage, to a second surface of the cell (54, 74).

6. A system for minimizing cell temperature differences in a fuel cell, comprising:
an air flow field (52, 72) adjacent a cell (54, 74), wherein the air flow field (52, 72) is operable to carry air over a first surface of the cell (54, 74) from a periphery of the cell (54, 74) to a center of the cell (54, 74);
a manifold heat exchanger (50, 70) adjacent the air flow field (52, 72), wherein the manifold heat exchanger (50, 70) is operable to receive the air from the air flow field (52, 72), and wherein the manifold heat exchanger (50, 70) is further operable to exhaust the air from at least one exhaust outlet (60) in a periphery of the manifold heat exchanger (50, 70).

7. The system of claim 6, wherein the air flow field (52, 72) includes at least one central opening (58) through which the air may pass from the air flow field (52, 72) to the manifold heat exchanger (50, 70).

8. The system of claim 6 wherein the manifold heat exchanger (50, 70) comprises a manifold plate (14).

9. The system of claim 6, further comprising a fuel flow field (56, 76) operable to carry fuel over a second surface of the cell (54, 74) from a center of the cell (54, 74) to a periphery of the cell (54, 74).

10. The system of claim 9, wherein the manifold heat exchanger (50, 70) is operable to supply the fuel flow field (56, 76) with fuel.
